# FASCICULE DE BREVET EUROPEEN

(11) **EP 0 568 442 B1**
(45) Date de publication et mention de la délivrance du brevet: **27.08.1997**
(21) Numéro de dépôt: 93401089.3
(22) Date de dépôt: 27.04.1993
(51) Int. Cl.: B60J 10/06

(54) **Joint d'étanchéité pour porte de véhicule**
Dichtung für Kraftfahrzeugtür
A door, water tight-stripping for motor vehicle

(30) Priorité: 30.04.1992 FR 9205380
(43) Date de publication de la demande: 03.11.1993
(73) Titulaire: HUTCHINSON, F-75008 Paris (FR)
(72) Inventeur: Guillon, Henri, F-45700 Saint-Maurice sur Fessard (FR)
(74) Mandataire: Orès, Bernard

(56) Documents cités:
- EP-A- 0 308 377
- EP-A- 0 355 948
- DE-A- 3 500 791
- US-A- 4 945 681

## Description

La présente invention se rapporte principalement à un joint d'étanchéité pour porte de véhicule.

De façon usuelle dans l'industrie automobile, l'étanchéité entre la porte et la carrosserie du véhicule est assurée par un joint fixé à la carrosserie tandis qu'un joint distinct assure l'étanchéité entre le cadre de la porte et une ou des vitre(s) de celle-ci.

Par exemple, US-A-4,945,681 décrit un dispositif d'étanchéité comportant un premier joint 7 assurant l'étanchéité au niveau de la glace 8 et un second joint W comportant deux tubes 2A et 2B, indépendant du premier joint 7 pour assurer l'étanchéité entre la carrosserie 5 et le cadre de porte 4. Les joints d'étanchéité de ce document ne peuvent pas assurer l'étanchéité des glaces affleurantes. Lors de la fermeture de la porte, le tube 2B est comprimé, d'une part, transversalement par la paroi indéformable 22 en direction de l'élément rigide de carrosserie 40 et, d'autre part, par l'élément 6 en direction de la base 1 du joint. Le tube 2B travaille donc en compression.

Il en résulte de nombreux inconvénients liés à la mise en place des divers joints, laquelle exige un temps de montage important alors que leur fabrication requiert une grande quantité de matières premières. De plus, l'étanchéité n'est pas toujours assurée de façon parfaite et il peut subsister des courants d'air avec pénétration de poussière et dans des cas extrêmes, d'eau. Pour remédier à ces inconvénients, EP-A-0 308 377 propose un joint pour porte de véhicule automobile assurant l'étanchéité d'une part entre une glace affleurante et la porte et, d'autre part, entre la porte et la carrosserie du véhicule. Il s'agit d'une étanchéité simple au niveau de la carrosserie qui risque de se révéler insuffisante pour assurer le confort des passagers du véhicule. De plus, la glace est munie de tenons glissants dans une rainure formée dans le joint, ce qui rend la géométrie de ce dernier extrêmement complexe.

C'est, par conséquent, un but de la présente invention d'offrir un joint d'étanchéité, notamment un joint pour véhicule automobile assurant une étanchéité améliorée.

C'est, encore, un but de la présente invention d'offrir un joint d'étanchéité monobloc, notamment pour véhicule automobile comportant au moins une glace affleurante.

C'est, aussi, un but de la présente invention d'offrir un joint dont le montage soit rapide.

C'est, enfin, un but de la présente invention d'offrir un joint qui requiert une faible quantité de matières premières, notamment de caoutchouc ou analogue pour sa fabrication.

L'invention a principalement pour objet un joint pour porte de véhicule, notamment automobile, comportant une coulisse pour assurer l'étanchéité entre une glace, notamment affleurante, et un cadre de porte ainsi qu'un premier élément pour assurer l'étanchéité entre le cadre de porte et la carrosserie du véhicule comprenant un tube formé par une gorge fermée par un soufflet (Joint tel que celui divulgué dans US-A-4 945 681), caractérisé en ce que le premier élément d'étanchéité comporte une lèvre de manière à ce que, lors de la fermeture de la porte, la lèvre prenne appui sur la carrosserie en provoquant le travail en extension dudit tube.

Selon un mode de réalisation de l'invention, il comporte, en outre, un second élément pour parfaire l'étanchéité entre le cadre de porte et la carrosserie du véhicule, s'étendant sensiblement parallèlement audit premier élément et qui forme avec lui un ensemble unitaire.

Selon un mode de réalisation de l'invention, la gorge a une section sensiblement rectangulaire et que le soufflet a une section en V, la pointe du V étant dirigée vers l'intérieur du tube.

Selon un mode de réalisation de l'invention, il est susceptible d'enrober complètement le cadre de la porte.

Selon un mode de réalisation de l'invention, lesdits premier et second éléments d'étanchéité s'étendent au-delà de la fenêtre sur au moins une partie du pourtour de la porte.

L'invention sera mieux comprise au moyen de la description ci-après et de la figure annexée donnée comme un exemple non limitatif sur laquelle :

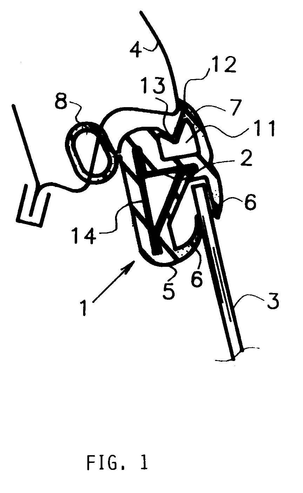

- la figure 1 est une vue en coupe d'un exemple de réalisation d'un joint selon la présente invention.

Sur la figure 1, les pièces en élastomère sont représentées dans leur condition non sollicitée, comme usuel dans l'industrie du caoutchouc.

Sur la figure 1, on peut voir un joint 1 selon la présente invention monté sur le cadre 2 d'une porte de véhicule automobile pour assurer l'étanchéité d'une part, entre une glace 3 affleurante et le cadre de la porte 2, et, d'autre part, entre le cadre 2 de la porte et la carrosserie 4 du véhicule. Une coulisse 5 comporte une lèvre d'étanchéité 6 sur chaque face de la glace 3.

L'étanchéité entre le cadre 2 de la porte et la carrosserie 4 est assurée par un premier élément d'étanchéité 7 et un second élément pour parfaire l'étanchéité 8 s'étendant sensiblement parallèlement.

Dans l'exemple avantageux illustré sur la figure 1 du joint 1 selon l'invention, le premier élément d'étanchéité 7 comporte non seulement un tube 11 mais aussi une lèvre 12, tandis que le second élément d'étanchéité 8 comporte un tube de section ovale. Une des originalités de l'exemple de réalisation illustré sur la figure 1 réside dans la forme et la fonction du tube 11. Lorsqu'on ferme la porte du véhicule, de façon usuelle, le tube du second élément d'étanchéité 8 est comprimé entre la carrosserie 4 et le cadre 2 de la porte du véhicule, tandis qu'au contraire, lorsque la lèvre 12 prend appui sur la carrosserie 4, le tube 11 travaille en extension. Le tube 11 illustré sur la figure 1 a une géométrie particulièrement bien adaptée pour pouvoir travailler en extension. Il est composé d'un profilé avantageusement rectangulaire fermé par un soufflet 13, avantageusement en V, la pointe du V étant dirigée vers l'intérieur du tube 11. Toutefois, il est bien entendu que la forme du soufflet 13 n'est pas limitée à la forme en V.

Le joint 1 de la figure 1 enrobe complètement le cadre 2 de la porte du véhicule dont la section a sensiblement la forme d'un triangle rectangle dont deux côtés ont été prolongés. La paroi interne du joint 1 épouse le contour de la paroi externe du cadre 2 de la porte. Une coupure 14, avantageusement dirigée vers l'intérieur du véhicule, permet le montage du joint 1 sur le cadre 2 de la porte.

Dans une variante de réalisation, le premier et second éléments parallèles d'étanchéité 7, 8 du joint 1 selon la présente invention s'étendent au-delà de la fenêtre, par exemple sur tout le pourtour de la porte du véhicule.

Le joint 1 est avantageusement réalisé en un ou plusieurs matériaux du type élastomère, mis en forme par extrusion ou co-extrusion pour constituer un ensemble unitaire, monobloc, que le joint 1 comporte, ou non, des armatures de renforcement.

## Revendications

1. Joint pour porte de véhicule, notamment automobile, comportant une coulisse (5) pour assurer l'étanchéité entre une glace (3), notamment affleurante, et un cadre de porte (2) ainsi qu'un premier élément (7) pour assurer l'étanchéité entre le cadre de porte (2) et la carrosserie (4) du véhicule comprenant un tube (11) formé par une gorge fermée par un soufflet (13), caractérisé en ce que le premier élément d'étanchéité (7) comporte une lèvre (12) de manière à ce que, lors de la fermeture de la porte, la lèvre (12) prenne appui sur la carrosserie (4) en provoquant le travail en extension dudit tube (11).

2. Joint selon la revendication 1, caractérisé en ce qu'il comporte, en outre, un second élément (8) pour parfaire l'étanchéité entre le cadre de porte (2) et la carrosserie (4) du véhicule, s'étendant sensiblement parallèlement audit premier élément (7) et qui forme avec lui un ensemble unitaire.

3. Joint selon la revendication 1 ou 2, caractérisé en ce que la gorge a une section sensiblement rectangulaire et que le soufflet (13) a une section en V, la pointe du V étant dirigée vers l'intérieur du tube (11).

4. Joint selon l'une quelconque des revendications précédentes, caractérisé en ce qu'il est susceptible d'enrober complètement le cadre de porte (2).

5. Joint selon l'une quelconque des revendications précédentes, caractérisé en ce que lesdits premier et second éléments d'étanchéité (7,8) s'étendent au-delà de la fenêtre sur au moins une partie du pourtour de la porte.

## Claims

1. Joint for the door of a vehicle, notably a car, comprising a slide (5) for ensuring a seal between a window (3), particularly a flush-fitted window, and a door frame (2), and a first element (7) for ensuring a seal between the door frame (2) and the vehicle bodywork (4), comprising a tube (11) formed by a groove closed off by a bellows (13), characterised in that the first sealing element (7) comprises a lip (12) so that, when the door is closed, the lip (12) abuts on the bodywork (4), causing the tube (11) to work under extension.

2. Joint according to claim 1, characterised in that it further comprises a second element (8) for perfecting the seal between the door frame (2) and the bodywork (4) of the vehicle, extending substantially parallel to said first element (7) and forming a unified whole therewith.

3. Joint according to claim 1 or 2, characterised in that the groove is substantially rectangular in cross section and the bellows (13) are V-shaped in cross section, the point of the V facing towards the inside of the tube (11).

4. Joint according to any one of the preceding claims, characterised in that it is capable of encasing the entire door frame (2).

5. Joint according to any one of the preceding claims, characterised in that said first and second sealing elements (7, 8) extend beyond the window over at least part of the periphery of the door.

## Patentansprüche

1. Türdichtung für ein Fahrzeug, insbesondere ein Kraftfahrzeug, mit einer Gleitschiene (5), um die Abdichtung zwischen einer Fensterscheibe (3), insbesondere einer versenkbaren, und einem Türrahmen (2) sicherzustellen, sowie einem ersten Element (7), um die Abdichtung zwischen dem Türrahmen (2) und dem Aufbau (4) des Fahrzeugs sicherzustellen, mit einem Rohr bzw. Schlauch (11), das bzw. der durch eine Auskehlung gebildet ist, die von einem Balgen (13) verschlossen ist, dadurch **gekennzeichnet,** daß das erste Abdichtelement (7) derart eine Lippe (12) aufweist, daß während des Schließens der Tür die Lippe (12) gegen den Aufbau (4) anliegt und hierbei die Belastung des genannten Rohres (11) auf Dehnung hervorruft.

2. Dichtung nach Anspruch 1, dadurch **gekennzeichnet,** daß sie außerdem ein zweites Element (8) aufweist, um die Abdichtung zwischen dem Türrahmen (2) und dem Fahrzeugaufbau (4) zu vervollkommnen, das sich im wesentlichen parallel zum ersten Element (7) erstreckt und zusammen mit diesem eine einheitliche Baugruppe bildet.

3. Dichtung nach Anspruch 1 oder 2, dadurch **gekennzeichnet,** daß die Auskehlung einen im wesentlichen rechteckigen Querschnitt und der Balgen (13) einen V-förmigen Querschnitt hat, wobei die Spitze des V zur Innenseite des Rohres (11) hin gerichtet ist.

4. Dichtung nach irgendeinem der vorangehenden Ansprüche, dadurch **gekennzeichnet,** daß sie imstande ist, den Türrahmen (2) vollständig zu umkleiden.

5. Dichtung nach irgendeinem der vorangehenden Ansprüche, dadurch **gekennzeichnet,** daß sich das erste und zweite Abdichtelement (7, 8) auf mindesten einem Abschnitt des Umfangs der Tür über das Fenster hinaus erstrecken.
